# DEMANDE DE BREVET EUROPEEN

(11) **EP 0 803 539 A1**
(43) Date de publication de la demande: **29.10.1997**
(21) Numéro de dépôt: 97400878.1
(22) Date de dépôt: 18.04.1997
(51) Int. Cl.: C08L 77/00, B65D 83/62

(54) **Récipient comprenant une enveloppe externe rigide et une poche interne souple**

(30) Priorité: 22.04.1996 FR 9605036
(71) Demandeur: ELF ATOCHEM S.A., 92800 Puteaux (FR)
(72) Inventeur: Corbic Bellinger, Marie-Pierre, 78800 Houilles (FR); Bouilloux, Alain, 27300 Bernay (FR); Basset, Dominique, 27300 Bernay (FR)
(74) Mandataire: Pochart, François

(57) **Abrégé**

L'invention a pour objet un nouveau récipient comprenant une enveloppe externe rigide et une poche interne souple, sous pression de gaz butane, dans lequel la poche interne souple est en un matériau comprenant un mélange de polyamide formant matrice et de polymère d'éthylène fonctionnalisé comprenant un copolymère éthylène/(méth)acrylate fonctionnalisé.

## Description

La présente invention a pour objet un nouveau récipient comprenant une enveloppe externe rigide et une poche interne souple. Plus particulièrement, le récipient selon l'invention est destiné à recevoir un gaz butane sous pression.

Un tel récipient est bien connu. Il se compose d'une enveloppe externe rigide, par exemple en métal (acier ou aluminium) et d'une poche souple interne, ladite poche étant fixée à l'enveloppe externe et communiquant avec l'extérieur par l'intermédiaire d'une vanne. Du gaz, notamment du gaz butane, est introduit dans l'espace entre la poche interne et l'enveloppe rigide, et exerce une pression sur la poche interne. L'utilisateur, par une action mécanique sur la vanne, peut vider le contenu de la poche sous l'action du gaz. Un tel récipient évite de contaminer le contenu de la poche avec le gaz propulseur et évite de répandre ce gaz dans l'atmosphère. Ces récipients sont couramment utilisés de nos jours, par exemple pour la fabrication de bombes de mousse à raser et autres.

Afin de remplir au mieux sa fonction, la poche interne doit être souple tout en restant résistante, afin d'être susceptible d'être introduite dans l'enveloppe rigide immédiatement après la fabrication de ladite poche souple. Par ailleurs, cette poche souple doit présenter une perméabilité au butane très faible, afin d'éviter toute contamination du contenu de la poche et/ou toute perte de pression du gaz propulseur. On recherche donc de telles poches.

US-A-3 873 667 décrit de telles poches souples constituées d'un mélange de polyamide et de polyoléfine, avec éventuellement une résine ionomère. Ce mélange est ensuite soumis à un traitement thermique. Ainsi, selon cet art antérieur, il est nécessaire de prévoir une étape de traitement supplémentaire avant introduction de la poche souple dans l'enveloppe, ce qui augmente la complexité du procédé et son coût.

On connaît déjà les polyamides, notamment le PA6, qui sont très résistants et présentent de bonnes qualités de perméabilité au butane. Cependant, ces polyamides ne sont pas assez souples pour que la poche résultante puisse être introduite, dans l'enveloppe rigide, immédiatement après sa fabrication. On a donc proposé d'incorporer des plastifiants aux compositions de polyamide; les quantités de plastifiant requises pour abaisser le module de flexion jusqu'à une valeur acceptable sont cependant très élevées, plus de 10% en poids. Or, des quantités élevées d'additifs, tels que des plastifiants, dans des compositions de polyamide entraînent souvent l'émission de produits nocifs, en particulier des fumées, aux températures élevées utilisées pour la transformation des compositions de polyamide.

Les polyoléfines ne seraient pas non plus adaptées pour la préparation de telles poches souples, puisqu'elles ne présentent pas une résistance suffisante, ni une perméabilité au butane faible. Afin de remédier à ce problème, on pourrait penser à augmenter l'épaisseur de la poche souple. Cependant, une épaisseur importante de la poche soulève des problèmes lors de l'insertion dans l'enveloppe rigide et augmente les coûts de production.

On recherche donc des compositions pour de telles poches souples, destinées à être introduites dans une enveloppe rigide de récipient, lesdites compositions devant :
(a) présenter une faible perméabilité au butane;
(b) être transformables sans problème d'émission;
(c) ne nécessiter aucun traitement supplémentaire; et
(d) présenter une souplesse suffisante pour que les poches puissent être introduites dans l'enveloppe rigide immédiatement après avoir été fabriquées.

On a maintenant trouvé que certains matériaux à base de polyamide et de copolymère de l'éthylène conviennent pour une telle application finale.

Ainsi, la présente invention a pour objet un récipient comprenant une enveloppe externe rigide et une poche interne souple, sous pression de gaz butane, dans lequel la poche interne souple présente un module de flexion à sec compris entre 400 et 2000 MPa, et est en un matériau comprenant un mélange de
(a) au moins un polyamide formant matrice;
(b) au moins un polymère d'éthylène fonctionnalisé qui est un copolymère éthylène/(méth)acrylate d'alkyle/ monomère insaturé fonctionnalisé, ledit monomère étant greffé ou terpolymérisé; et éventuellement
(c) au moins un polyéthylène non fonctionnalisé.

Selon une première variante, dans le matériau de ladite poche, copolymère (b) est :
(b1) copolymère éthylène/(méth)acrylate d'alkyle/ monomère insaturé à fonction acide carboxylique ou anhydride d'acide carboxylique, ledit monomère étant greffé ou terpolymérisé; ou
(b2) copolymère éthylène/(méth)acrylate d'alkyle/ monomère insaturé à fonction époxy, ledit monomère étant greffé ou terpolymérisé.

Selon une seconde variante, le matériau de ladite poche comprend un mélange de :
(a) un polyamide formant matrice;
(b) un copolymère éthylène/(méth)acrylate d'alkyle en C1-C4/anhydride maléique; et
(c) un polyéthylène non fonctionnalisé.

Selon une troisième variante, le matériau de ladite poche comprend un mélange de :
(a) un polyamide formant matrice;
(b) un copolymère éthylène/(méth)acrylate d'alkyle en C1-C4/méthacrylate de glycidyle; et
(c) un polyéthylène non fonctionnalisé.

Selon une quatrième variante, le matériau de ladite poche comprend un mélange de :
(a) un polyamide formant matrice;
(b) un mélange d'un copolymère (b1) éthylène/(méth)acrylate d'alkyle en C1-C4/anhydride maléique et d'un copolymère (b2) éthylène/(méth)acrylate d'alkyle en C1-C4/méthacrylate de glycidyle.

Selon cette variante, le ratio entre les copolymères (b1) et (b2) peut varier dans une large mesure, et est par exemple compris entre 1/3 et 10/1, ou encore entre 1/1 et 3/1. Un catalyseur peut aussi être ajouté au mélange du matériau selon cette variante. Ce terme "catalyseur" est utilisé selon son sens classique pour l'homme de l'art, et dans le cas de la quatrième variante, peut servir à faire réticuler les deux copolymères (b1) et (b2).

Selon un mode de réalisation, dans le matériau de ladite poche, le polyéthylène non fonctionnalisé, lorsqu'il est présent, est un LDPE, un LLDPE, de préférence un VLDPE, ou un PE métallocène.

Selon un autre mode de réalisation, dans le matériau de ladite poche, le polyéthylène non fonctionnalisé présente une densité inférieure ou égale à 0,920.

Selon un autre mode de réalisation, dans le matériau de ladite poche, le polyamide est du PA6.

Selon encore un autre mode de réalisation, le matériau de ladite poche comprend de plus (d) au moins un plastifiant.

Un matériau avantageux pour la poche souple selon l'invention comprend, en % poids par rapport au poids du matériau :
(a) 50 à 70% de polyamide;
(b) 5 à 20% de polymère d'éthylène fonctionnalisé;
(c) 15 à 40% de polyéthylène non fonctionnalisé; et éventuellement
(d) 0 à 10% de plastifiant.

Un autre matériau avantageux pour la poche souple selon l'invention comprend, en % poids par rapport au poids du matériau :
(a) 30 à 70% de polyamide;
(b) 70 à 30% de polymère d'éthylène fonctionnalisé; et éventuellement (d) 0 à 10% de plastifiant.

Selon encore un autre mode de réalisation, la poche souple présente un module de flexion à sec compris entre 600 et 1700 MPa, de préférence entre 700 et 1200.

Selon encore un autre mode de réalisation, la perméabilité au butane de ladite poche, pour une épaisseur de 200 µm et une surface de 210 cm2, et à 35°C, est inférieure à 3 g/an, de préférence inférieure à 1 g/an.

L'invention est maintenant décrite plus en détail dans la description qui suit.

Le récipient selon l'invention est de conception classique, la poche ayant par exemple une contenance de 0,1 à 1 litre. Dans un premier temps, on fabrique l'enveloppe rigide externe, en acier ou en aluminium par exemple, avec formation d'un col au niveau supérieur de ladite enveloppe. Ensuite on insère la poche dans ladite enveloppe et on scelle celle-ci au niveau du col, le futur contenu et le gaz propulseur étant introduits de façon classique, avant, pendant ou après le scellement. Une vanne vient ensuite coiffer le col. La poche est fabriquée de façon classique, par exemple par extrusion-soufflage ou injection-soufflage de granulés de matériau polymère.

Le gaz utilisé est le gaz butane, ce terme désignant notamment le n-butane, l'iso-butane et leurs mélanges. Cependant, tout autre gaz approprié pourrait être utilisé.

L'invention réside principalement dans le matériau utilisé pour la fabrication des poches souples internes, à base de polyamide, de polymères d'éthylène fonctionnalisé et éventuellement de polyéthylène non fonctionnalisé et de plastifiant.

Dans la présente demande, le terme "polyamide" désigne de façon classique les produits de condensation :
- d'un ou plusieurs alpha-omega-amino-acides, tels que ceux contenant par exemple de 6 à 12 atomes de carbone; des exemples de tels amino-acides sont les acides aminocaproïque, amino-7-heptanoïque, amino-11-undécénoïque et amino-12-dodécanoïque; ou
- d'un ou plusieurs lactames correspondants aux amino-acides ci-dessus; des exemples de tels lactames sont les caprolactame, oenanlactame et lauryllactame; ou
- d'une ou plusieurs combinaisons sensiblement stoechiométriques d'une ou plusieurs diamines aliphatiques et/ou cycloaliphatiques et/ou aromatique-aliphatiques, ou de leurs sels, avec un ou plusieurs diacides carboxyliques aliphatiques ou aromatiques, ou leurs sels; des exemples de telles diamines sont l'hexaméthylènediamine, la dodécaméthylènediamine, la métaxylylènediamine, le BACM, le BMACM, et la triméthylhexaméthylène-diamine, tandis que des exemples de tels diacides sont les acides téré- et isophtalique, adipique, azélaïque, sébacique eu dodécanedicarboxylique; ou
- des mélanges des monomères précités; et
- des mélanges des produits de condensation résultant, éventuellement avec d'autres polymères compatibles avec les polyamides.

A titre d'exemple, le polyamide est le PA6, PA6,6, PA6,10, PA11, PA12, PA6,12 et PA12,12. Le polyamide préféré est le PA6. Le poids moléculaire des polyamides peut varier dans un large mesure, ce que l'homme de l'art appréciera.

Ce polyamide forme la matrice du matériau polymère, les polymères d'éthylène (fonctionnalisé ou non étant dispersés dans cette phase sous forme de nodules, dont le diamètre peut être de 0,1 à 5µm.

Le ratio polyamide/polymères éthylèniques (composants (b) et (c)) dans le matériau selon l'invention peut varier dans un large intervalle, ce qu'appréciera l'homme de l'art. Le polyamide est présent en une quantité suffisante pour constituer la phase matrice.

Par exemple, le polyamide représente de 30 à 80%, avantageusement de 50 à 70% en poids, par rapport au poids du matériau.

Dans la présente demande, le terme "polymère d'éthylène fonctionnalisé", le composant (b), désigne les produits polymères dont l'éthylène constitue une partie substantielle, le comonomère étant un (méth)acrylate d'alkyle, et qui portent de plus des groupes réactionnels ou fonctionnels sur ou le long de la chaîne. Un tel composant (b) peut contenir d'autres comonomères que ceux énumérés ci-dessus.

Les monomères qui sont greffés ou terpolymérisés et qui portent les fonctionnalités peuvent porter des fonctionnalités dérivées d'acide carboxylique, des époxy, des fonctions amino, ou autre.

À titre de composant (b1), l'invention fournit les copolymères éthylène/ (méth) acrylate d'alkyle/monomère insaturé à fonction acide carboxylique ou anhydride d'acide carboxylique, ledit monomère étant greffé ou terpolymérisé. À titre d'exemple, on peut citer les copolymères éthylène et (méth)acrylate d'alkyle et anhydride, contenant au moins 50% en poids d'éthylène, de préférence au moins 80% en poids et de 0,01 à 10% en poids, de préférence 0,5 à 5% en poids, d'anhydride, par rapport au poids total de copolymère. Comme (méth)acrylate d'alkyle, on utilise par exemple ceux dont la chaîne alkyle, linéaire ou ramifié ou cyclique, contient jusqu'à 10, par exemple de 1 à 4, atomes de carbone. Des exemples de ceux-ci sont l'acrylate de n-, iso-et tert-butyle, d'éthyle, d'éthyl-2-hexyle, de cyclohexyle, le méthacrylate d'éthyle, de méthyle. Les composés préférés sont le méthacrylate de méthyle, l'acrylate d'éthyle et l'acrylate de butyle.
Comme anhydride, on peut utiliser les anhydrides d'acide dicarboxylique tel que l'anhydride maléique, l'anhydride citraconique, l'anhydride itaconique, l'anhydride tétrahydrophtalique, l'anhydride méthyl-2-maléique, l'anhydride diméthyl-2,3-maléique, l'anhydride maléique étant préféré.

De tels composants (bl) sont disponibles chez Elf Atochem sous la dénomination générale LOTADER®.

À titre de composant (b2), l'invention fournit les copolymères éthylène/(méth)acrylate d'alkyle/ monomère insaturé à fonction époxy, ledit monomère étant greffé ou terpolymérisé.
À titre d'exemple, on peut citer les copolymères éthylène et (méth)acrylate d'alkyle et monomère époxy (type méthacrylate de glycidyle), contenant au moins 50% en poids d'éthylène, de préférence au moins 80% en poids et de 0,01 à 10% en poids, de préférence 0,5 à 5% en poids, de monomère époxy, par rapport au poids total de copolymère.
Comme (méth)acrylate d'alkyle, on utilise ceux cités ci-dessus à propos du composant (b1), le méthacrylate de méthyle, l'acrylate d'éthyle et l'acrylate de butyle étant préférés.
Comme monomère époxy, on peut utiliser les époxy classiquement utilisés dans de tels copolymères, tels qu'un monomère insaturé à groupe pendant époxycyclohexyle (tel que (méth)acrylate d'époxycyclohexyle) ou le méthacrylate de glycidyle, ce dernier étant préféré.

De tels composants (b2) sont disponibles chez Elf Atochem sous la dénomination générale LOTADER®.

Dans la présente demande, le terme "polyéthylène non fonctionnalisé" désigne les homopolymères ou copolymères d'éthylène qui ne sont pas fonctionnalisés.
A titre d'exemple, on peut citer :
- le polyéthylène PE, les copolymères de l'éthylène avec des alpha-oléfines, l'éthylène représentant par exemple 35 à 80% en poids, les PE métallocène et Ziegler;
- les copolymères de l'éthylène avec un ou plusieurs produit(s) choisi(s) parmi : (i) les esters d'acides carboxyliques; (ii) les esters vinyliques d'acides carboxyliques saturés tel que l'acétate de vinyle; et (iii) les esters d'acides carboxyliques insaturés, tel que le (méth)acrylate d'alkyle, l'éthylène représentant par exemple de 35 à 80% en poids;
- les mélanges des polyéthylènes ci-dessus avec d'autres polymères, en proportions minoritaires, tels que des élastomères, comme l'EPR.

Les copolymères mentionnés ci-dessus peuvent être copolymérisés de façon statistique ou séquencée et présenter une structure linéaire ou ramifiée.
A titre d'exemple, on peut utiliser :
le polyéthylène (HDPE, LDPE, LLDPE ou VLDPE) ou PE métallocène ou Ziegler;
les copolymères éthylène/acétate de vinyle (EVA);
les copolymères éthylène/acrylate de méthyle ou de butyle.

Le poids moléculaire des polyéthylènes peut varier dans un large mesure, ce que l'homme de l'art appréciera.

Le polyéthylène non fonctionnalisé préféré est le polyéthylène VLDPE.

Des mélanges de plusieurs composants sont aussi envisagés dans le cadre de la présente invention. Ainsi, "un polyamide" peut être un mélange de deux ou plusieurs polyamides, "un polyéthylène" peut être un mélange de deux ou plusieurs polyéthylènes, "polyéthylène fonctionnalisé" peut être un mélange de deux ou plusieurs polyéthylènes fonctionnalisés,"(b)" peut être un mélange de deux ou plusieurs (b) individuels, etc.

Il est aussi possible d'ajouter un catalyseur de réaction lorsque plusieurs composants avec des monomères réactifs sont présents. Par exemple, on peut ajouter du diméthyl suif amine à un mélange de composants (b1) et (b2).

Dans la présente demande, le terme "plastifiant" a la signification communément admise dans l'art.
À titre d'exemple on peut citer le butylbenzène sulfonamide (BBSA), l'hexyl-para-hydroxy-benzoate d'éthyle (EHPB) et l'hexyl-para-hydroxy-benzoate de décyle (DHPB).

La poche selon l'invention présente une épaisseur classique, par exemple entre 50 et 500µm, de préférence entre 150 et 250µm.

On ne sortirait pas du cadre de la présente invention si en plus de la couche utilisée, on utilisait une ou plusieurs autre(s) couche(s) afin d'obtenir un multi-couches.

Les exemples suivants illustrent l'invention sans la limiter. Sauf indication contraire, les proportions sont exprimées en parties en poids. Dans les exemples, le MFI représente l'indice d'écoulement à l'état fondu.

### Exemp1e 1.

On prépare le matériau suivant :
65 parties de PA6, présentant un MFI de 17-20 (235°C, 2,16kg);
25 parties de polyéthylène présentant MFI de 0,9 (190°C, 2,16kg) et de densité 0,920;
10 parties d'un terpolymère éthylène/acrylate de butyle/anhydride maléique de composition en poids 90,9/6,0/3,1 présentant un MFI de 5 (190°C, 2,16kg).

On introduit dans la trémie d'une extrudeuse double vis Werner de diamètre 40mm, par l'intermédiaire de trois doseurs, les composants du matériau. Le débit total de l'extrudeuse est de 50kg/h et la vitesse de rotation est de 150tpm. Les températures matière au niveau des fourreaux et en tête sont respectivement de 260°C, 230°C, 235°C et 255°C.

Les granulés obtenus sont moulés par injection pour obtenir des barreaux de 80x10x4 mm sur lesquels sont mesurés le module de flexion à sec et le module de flexion à l'état conditionné. Ces granulés sont aussi transformés par extrusion-soufflage en des poches ayant une épaisseur moyenne de 200µm, sur lesquelles est mesurée la perméabilité au butane.

Le module de flexion à sec est mesuré conformément à la norme ISO 178, et est exprimé en MPa.

Le module de flexion à l'état conditionné (14 jours à 23°C et 50% d'humidité relative) est mesuré conformément à la norme ISO 178, et est exprimé en MPa.

La perméabilité au butane est mesurée par gravimétrie dans les conditions suivantes: surface: 210cm2; épaisseur: 200µm; température : 35°C; la perméation au butane est exprimée en g/an.

### Exemple 2.

On prépare le matériau suivant :
61 parties de PA6, présentant un MFI de 17-20 (235°C, 2,16kg);
24 parties de polyéthylène présentant MFI de 0,9 (190°C, 2,16kg) et de densité 0,920;
10 parties d'un terpolymère éthylène/acrylate de butyle/anhydride maléique de composition en poids 90,9/6,0/3,1 présentant un MFI de 5 (190°C, 2,16kg);
5 parties d'un plastifiant (BBSA).

Pour la préparation et la mise en oeuvre, on procède comme dans l'exemple 1, avec les constituants respectifs, le plastifiant étant injecté en milieu d'extrudeuse.

### Exemple 3.

On prépare le matériau suivant :
60 parties de PA6, présentant un MFI de 17-20 (235°C, 2,16kg);
32 parties de polyéthylène présentant MFI de 0,8 (190°C, 2,16kg) et de densité 0,900;
8 parties d'un terpolymère éthylène/acrylate de butyle/anhydride maléique de composition en poids 90,9/6,0/3,1 présentant un MFI de 5 (190°C, 2,16kg).

Pour la préparation et la mise en oeuvre, on procède comme dans l'exemple 1, avec les constituants respectifs.

### Exemple 4.

On prépare le matériau suivant :
57 parties de PA6, présentant un MFI de 17-20 (235°C, 2,16kg);
30 parties de polyéthylène présentant MFI de 0,8 (190°C, 2,16kg) et de densité 0,900;
8 parties d'un terpolymère éthylène/acrylate de butyle/anhydride maléique de composition en poids 90,9/6,0/3,1 présentant un MFI de 5 (190°C, 2,16kg).
5 parties d'un plastifiant (BBSA, EHPB ou DHPB).

Pour la préparation et la mise en oeuvre, on procède comme dans l'exemple 1, avec les constituants respectifs, le plastifiant étant injecté en milieu d'extrudeuse.

### Exemple 5.

On prépare le matériau suivant :
50 parties de PA6, présentant un MFI de 17-20 (235°C, 2,16kg);
37,5 parties d'un terpolymère éthylène/acrylate de butyle/anhydride maléique de composition en poids 68,2/30/1,8 et présentant un MFI de 5 (190°C, 2,16kg);
11 parties d'un terpolymère éthylène/acrylate de méthyle/méthacrylate de glycidyle de composition en poids 64/28/8 et présentant un MFI de 6;
1 partie d'un catalyseur de la réaction anhydride maléique/méthacrylate de glycidyle (diméthyl suif amine) en mélange maître dans le premier terpolymère cité.

Pour la préparation et la mise en oeuvre, on procède comme dans l'exemple 1, avec les constituants respectifs, le nombre de doseurs étant cette fois de quatre.

Les matériaux des exemples ci-dessus sont testés pour déterminer le module de flexion à sec, la perméabilité au butane, ainsi que le module de flexion à l'état conditionné. Les résultats sont consignés dans le tableau 1 ci-après.

**Tableau 1**

| Ex. | Module de Flexion à sec (MPa) | Perméabilité (g/an) | Module de flexion conditionné (MPa) |
|---|---|---|---|
| 1 | 1200 | 0,79 | 900 |
| 2 | 900 | 0,92 | 600 |
| 3 | 1000 | 0,09 | 750 |
| 4 | 750 | 0,16 | 500 |
| 5 | 700 | 0,29 | 500 |

Bien entendu, la présente invention n'est pas limitée aux modes de réalisation donnés en exemple mais est susceptible de nombreuses variations aisément accessibles à l'homme de l'art.

## Revendications

1. Récipient comprenant une enveloppe externe rigide et une poche interne souple, sous pression de gaz butane, dans lequel la poche interne souple présente un module de flexion à sec compris entre 400 et 2000 MPa, et est en un matériau comprenant un mélange de
(a) au moins un polyamide formant matrice;
(b) au moins un polymère d'éthylène fonctionnalisé qui est un copolymère éthylène/(méth)acrylate d'alkyle/ monomère insaturé fonctionnalisé, ledit monomère étant greffé ou terpolymérisé; et éventuellement
(c) au moins un polyéthylène non fonctionnalisé.

2. Récipient selon la revendication 1, dans lequel ledit copolymère (b) est :
(b1) copolymère éthylène/(méth)acrylate d'alkyle/ monomère insaturé à fonction acide carboxylique ou anhydride d'acide carboxylique, ledit monomère étant greffé ou terpolymérisé; ou
(b3) copolymère éthylène/(méth)acrylate d'alkyle/ monomère insaturé à fonction époxy, ledit monomère étant greffé ou terpolymérisé.

3. Récipient selon la revendication 1 ou 2, dans lequel ladite poche est en un matériau comprenant un mélange de
(a) un polyamide formant matrice;
(b) un copolymère éthylène/(méth)acrylate d'alkyle en C1-C4/anhydride maléique; et
(c) un polyéthylène non fonctionnalisé.

4. Récipient selon la revendication 1 ou 2, dans lequel ladite poche est en un matériau comprenant un mélange de
(a) un polyamide formant matrice;
(b) un copolymère éthylène/(méth)acrylate d'alkyle en C1-C4/méthacrylate de glycidyle; et
(c) un polyéthylène non fonctionnalisé.

5. Récipient selon la revendication 1 ou 2, dans lequel ladite poche est en un matériau comprenant un mélange de
(a) un polyamide formant matrice;
(b) un mélange d'un copolymère (bl) éthylène/(méth)acrylate d'alkyle en C1-C4/anhydride maléique et d'un copolymère (b2) éthylène/(méth)acrylate d'alkyle en C1-C4/méthacrylate de glycidyle.

6. Récipient selon l'une quelconque des revendications 1 à 4, dans lequel dans le matériau de ladite poche, le polyéthylène non fonctionnalisé est un LDPE, un LLDPE, de préférence un VLDPE, ou un PE métallocène.

7. Récipient selon l'une quelconque des revendications 1 à 4 et 6, dans lequel dans le matériau de ladite poche, le polyéthylène non fonctionnalisé présente une densité inférieure ou égale à 0,920.

8. Récipient selon l'une quelconque des revendications 1 à 7, dans lequel dans le materiau de ladite poche, le polyamide est du PA6.

9. Récipient selon l'une quelconque des revendications 1 à 8, dans lequel le matériau de ladite poche comprend de plus (d) au moins un plastifiant.

10. Récipient selon l'une quelconque des revendications 1 à 4 et 6 à 9, dans lequel le matériau de ladite poche comprend, en % poids par rapport au poids du matériau :
(a) 50 à 70% de polyamide;
(b) 5 à 20% de polymère d'éthylène fonctionnalisé;
(c) 15 à 40% de polyéthylène non fonctionnalisé; et éventuellement
(d) 0 à 10% de plastifiant.

11. Récipient selon l'une quelconque des revendications 1, 5, 8 et 9, dans lequel le matériau de ladite poche comprend, en % poids par rapport au poids du matériau :
(a) 30 à 70% de polyamide;
(b) 70 à 30% de polymère d'éthylène fonctionnalisé; et éventuellement
(d) 0 à 10% de plastifiant.

12. Récipient selon l'une quelconque des revendications 1 à 11, dans lequel ladite poche présente un module de flexion à sec compris entre 600 et 1700 MPa, de préférence entre 700 et 1200.

13. Récipient selon l'une quelconque des revendications 1 à 12, dans lequel la perméabilité au butane de ladite poche, pour une épaisseur de 200 µm et une surface de 210 cm2, et à 35°C, est inférieure à 3 g/an, de préférence inférieure à 1 g/an.
